(19) **Europäisches Patentamt**

**European Patent Office**

**Office européen des brevets**

(11) **EP 1 376 947 A1**

(12) **EUROPÄISCHE PATENTANMELDUNG**

(43) Veröffentlichungstag:
**02.01.2004 Patentblatt 2004/01**

(51) Int Cl.⁷: **H04L 12/56**

(21) Anmeldenummer: **02014315.2**

(22) Anmeldetag: **27.06.2002**

(84) Benannte Vertragsstaaten:
**AT BE CH CY DE DK ES FI FR GB GR IE IT LI LU MC NL PT SE TR**
Benannte Erstreckungsstaaten:
**AL LT LV MK RO SI**

(71) Anmelder: **SIEMENS AKTIENGESELLSCHAFT**
**80333 München (DE)**

(72) Erfinder:
• **Hollarek, Michael**
**2301 Franzensdorf (AT)**

• **Müller, Heribert**
**3730 Eggenburg (AT)**

(74) Vertreter: **Berg, Peter, Dipl.-Ing. et al**
**European Patent Attorney,**
**Siemens AG,**
**Postfach 22 16 34**
**80506 München (DE)**

(54) **Adapting the number of frames transmitted per packet to the network load**

(57) Es wird ein Verfahren zur Übermittlung eines Datenstroms mittels Datenpaketen angegeben, bei dem der Datenstrom in Rahmen unterteilt wird und bei dem bei hoher Belastung des Datennetzes, über welches die Datenpakete übermittelt werden, mehr als ein Rahmen in einem Datenpaket übermittelt wird. Daraus resultiert eine geringere Netzbelastung, da der Paket-Header zwar eine bestimmte absolute Datenmenge umfasst, das Verhältnis bezogen auf die übertragenen Nutzdaten sich aber verbessert. Weiterhin wird eine Anordnung zur Durchführung des erfindungsgemäßen Verfahrens angegeben.

Fig. 1

EP 1 376 947 A1

**Beschreibung**

Die Erfindung betrifft ein Verfahren zur Übermittlung eines Datenstroms mittels Datenpaketen, bei dem der Datenstrom in Rahmen unterteilt wird. Weiterhin betrifft die Erfindung eine Anordnung zur Durchführung des Verfahrens.

In paketvermittelnden Telekommunikationsnetzen kommt es - da die einzelnen Datenpakete in der Regel über unterschiedliche Wege durch das Datennetz übertragen werden - zu unterschiedlichen Übertragungszeiten beziehungsweise auch zu falscher Reihenfolge der Pakete beim Empfänger. Dies ist insbesondere bei kontinuierlichen Datenströmen, so wie dies etwa bei der Videoübertragung oder Sprachübertragung vorliegt, äußerst störend.

Aus dem Stand der Technik sind daher Verfahren bekannt, welche die Datenpakete um eine konstante Zeit, bezogen auf Sender und Empfänger, verzögern. Je nach Empfangszeitpunkt der einzelnen Pakete werden diese mehr oder weniger lang zwischengespeichert bevor sie letztlich wieder als kontinuierlicher Datenstrom ausgegeben werden. Gegebenenfalls kann so auch die korrekte Reihenfolge der Datenpakete wieder hergestellt werden.

Aus der EP 01116763.2 vom 20. Juli 2001, "Verfahren und Anordnung zur Übermittlung von Daten aus einem ersten Datennetz in ein zweites Datennetz" ist beispielsweise auch bekannt, dass bei der Übermittlung von Datenpaketen, welche neben der Nutzinformation eine Information über ihre zeitliche Reihenfolge umfassen, das Auslesen der zwischengespeicherten Daten an einer vorgebbaren, von der durch die Speicherung von Datenpaketen resultierenden Speichersegmentierung unabhängigen Stelle der Speichereinrichtung gestartet wird.

Aus dem Stand der Technik sind also Verfahren bekannt, welche die Datenpakete so verzögern, dass daraus wieder ein geordneter, kontinuierlicher Datenstrom generiert werden kann. Die Verzögerungszeit und damit die Größe des Zwischenpuffers hängt dabei direkt von der Belastung des Datennetzes beziehungsweise der Verzögerungszeit der Datenpakete durch das Datennetz ab. Aus praktischen Gründen können die Datenpakete jedoch nicht beliebig verzögert, die Zwischenspeicher nicht beliebig vergrößert werden.

Der Erfindung liegt daher die Aufgabe zugrunde, ein verbessertes Verfahren zur Übermittlung eines Datenstroms anzugeben.

Dies geschieht erfindungsgemäß mit einem Verfahren der eingangs genannten Art, bei dem bei hoher Belastung des Datennetzes, über welches die Datenpakete übermittelt werden, mehr als ein Rahmen in einem Datenpaket übermittelt wird.

Zur Übertragung von Audiodaten über paketvermittelnde Netze werden Kodierverfahren wie zum Beispiel der Standard G.723.1, "Dual rate speech coder for multimedia communications transmitting at 5.3 and 6.3 kbit/s", eingesetzt. Dabei werden digitalisierte Audiodaten, beispielsweise Sprache, in Rahmen verschiedener Länge gepackt und mit einem sogenannten Header versehen. Weitere Beispiele sind in diesem Zusammenhang auch die Standards G.711 und G.729.

Erfindungsgemäß wird nun mehr als ein Rahmen in einem Datenpaket übermittelt, woraus eine geringere Netzbelastung resultiert, da der Header zwar eine bestimmte absolute Datenmenge umfasst, das Verhältnis bezogen auf die übertragenen Nutzdaten sich aber verbessert.

Besonders vorteilhaft ist es dabei,

- wenn zur Bestimmung der Netzbelastung das Verlustverhältnis, welches dem Quotienten aus nicht rechtzeitig übermittelten Datenpaketen und erwarteten Datenpaketen entspricht, herangezogen wird,
- wenn die Anzahl der Rahmen pro Datenpaket erhöht wird, wenn das Verlustverhältnis eine obere Schwelle überschreitet und
- wenn die Anzahl der Rahmen pro Datenpaket gesenkt wird, wenn das Verlustverhältnis diese oder eine untere Schwelle unterschreitet.

Hierbei wird das Verlustverhältnis, welches dem Quotienten aus nicht rechtzeitig übermittelten Datenpaketen und erwarteten Datenpaketen entspricht, zum Beispiel der im Standard H.323 v4, "Packet-based multimedia communications systems" definierte Parameter "fraction lost", herangezogen, um die Netzbelastung zu bestimmen. In Folge wird die Anzahl der Rahmen pro Datenpaket erhöht, wenn das Verlustverhältnis eine obere Schwelle überschreitet, also das Netz stark belastet ist, und die Anzahl der Rahmen pro Datenpaket wieder gesenkt, wenn das Verlustverhältnis diese oder eine untere Schwelle unterschreitet, das Netz also weniger belastet ist. Dabei kann ein und dieselbe Schwelle zur Regelung herangezogen, oder eine obere und eine untere Schwelle definiert werden. Letzteres führt aufgrund der Hysterese zu stabilerem, aber auch langsamerem Regelverhalten.

Günstig ist es weiterhin, wenn das Verlustverhältnis in Empfangs- und in Senderichtung bestimmt wird und wenn der höhere der beiden Werte für die Bestimmung der Anzahl der Rahmen pro Datenpaket herangezogen wird.

Damit wird sichergestellt, dass Unterschiede in der Netzbelastung in Sende- und Empfangsrichtung entsprechend berücksichtigt werden. Dabei wird der höhere, also der die höhere Netzbelastung charakterisierende, Wert für das Regelverfahren herangezogen.

Eine vorteilhafte Ausgestaltung der Erfindung ist auch mit einem Verfahren gegeben, bei dem der zeitliche Verlauf des Verlustverhältnisses geglättet wird, insbesondere mit Hilfe eines Tiefpassfilters.

Die Netzbelastung kann mitunter auch in einem kurzen Zeitbereich sehr stark schwanken. Um die Auswirkungen für das Regelverfahren gering zu halten, wird der zeitliche Verlauf des Verlustverhältnisses geglättet, bevor dieses für die Bestimmung der Anzahl der Rahmen pro Datenpaket herangezogen wird. Stärkere Glättung führt auch hier zu stabilerem, aber langsamerem Regelverhalten.

Besonders vorteilhaft ist eine Variante der Erfindung, bei der als obere Schwelle im wesentlichen 3 Prozent und als untere Schwelle im wesentlichen 1 Prozent festgelegt wird.

Diese Werte haben sich bei praktischen Versuchen als sehr günstig herausgestellt und stellen einen Kompromiss aus Stabilität und schnellem Ansprechverhalten des Regelalgorithmus dar.

Die Aufgabe der Erfindung wird auch mit Hilfe einer Vorrichtung gelöst, welche zur Durchführung aller Schritte des erfindungsgemäßen Verfahrens vorbereitet ist,

- wobei diese Mittel zur Erkennung hoher Belastung eines Datennetzes umfasst und
- wobei diese Mittel zum Senden von mehr als einem Rahmen je Datenpaket umfasst.

Somit können mehrere Rahmen je Datenpaket übermittelt werden, wenn das Datennetz stark belastet ist, um die Belastung wieder zu senken. Im übrigen gelten die beim erfindungsgemäßen Verfahren genannten Vorteile.

Besonders vorteilhaft ist es dabei,

- wenn Mittel zur Auswertung des Verlustverhältnisses, welches dem Quotienten aus nicht rechtzeitig übermittelten Datenpaketen und erwarteten Datenpaketen entspricht, vorhanden sind,
- wenn Mittel vorhanden sind, die Anzahl der Rahmen pro Datenpaket zu erhöhen, sofern das Verlustverhältnis eine obere Schwelle überschreitet und
- wenn Mittel vorhanden sind, die Anzahl der Rahmen pro Datenpaket zu senken, sofern das Verlustverhältnis diese oder eine untere Schwelle unterschreitet.

Diese Vorrichtung bildet die Basis, um einen Regelalgorithmus zu realisieren, bei dem die Regelung mit Hilfe des Verlustverhältnisses, welches dem Quotienten aus nicht rechtzeitig übermittelten Datenpaketen und erwarteten Datenpaketen entspricht, erfolgt. Zu diesem Zweck sind weiterhin Mittel zur Berücksichtigung einer, beziehungsweise einer oberen und einer unteren, Schwelle vorhanden. Günstig ist es weiterhin,

- wenn Mittel zur Bestimmung des Verlustverhältnisses in Empfangs- und in Senderichtung vorhanden sind und
- wenn Mittel vorhanden sind, den höheren der beiden Werte für die Bestimmung der Anzahl der Rahmen pro Datenpaket heranzuziehen.

Diese Ausgestaltung bildet die Basis, die Netzbelastung sowohl in Sende- als auch in Empfangsrichtung berücksichtigen zu können. Dabei wird der höhere, also der die höhere Netzbelastung charakterisierende, Wert für das Regelverfahren herangezogen.

Eine vorteilhafte Ausgestaltung der Erfindung ist auch mit einem Verfahren gegeben, bei dem diese Mittel zur Glättung des zeitlichen Verlaufs des Verlustverhältnisses umfasst, insbesondere ein Tiefpassfilter.

Wie bereits erwähnt können die Auswirkungen für das Regelverfahren aufgrund von Schwankungen in der Netzbelastung mittels Glättung des zeitlichen Verlaufs des Verlustverhältnisses gering gehalten werden.

Besonders vorteilhaft ist eine Variante der Erfindung, bei der als obere Schwelle im wesentlichen 3 Prozent und als untere Schwelle im wesentlichen 1 Prozent festgelegt ist.

Diese Variante der Erfindung stellt eine einfache Vorrichtung zur Durchführung des erfindungsgemäßen Verfahrens dar. Aufgrund dieser Festlegung ist eine praktische Umsetzung leicht möglich.

Die Erfindung wird anhand eines in der Figur dargestellten Ausführungsbeispiels näher erläutert, welches eine beispielhafte Ausgestaltung der Erfindung, umfassend einen Multiplizierer, einen Tiefpassfilter und einen Diskriminator, betrifft.

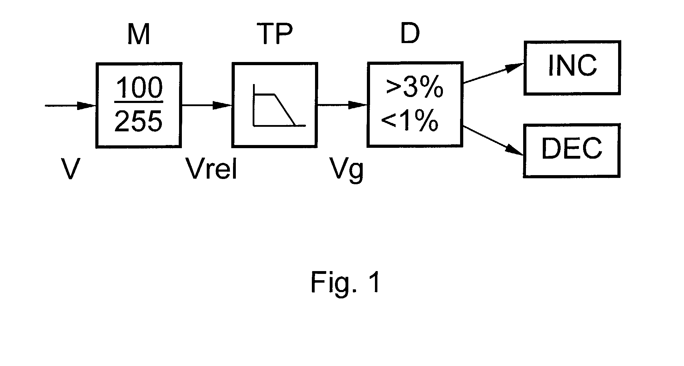

Figur 1 zeigt einen Multiplizierer M, bei dem das Verlustverhältnis V als Eingang und das relative Verlustverhältnis Vrel als Ausgang vorgesehen ist, einen Tiefpass TP mit dem relativen Verlustverhältnis Vrel als Eingang und dem geglätteten Verlustverhältnis Vg als Ausgang, sowie einen Diskriminator D mit dem geglätteten Verlustverhältnis Vg als Eingang und zwei Ausgängen, einer zu einer Inkrement-Stufe INC und einer zu einer Dekrement-Stufe DEC.

Die Funktion der in der Figur 1 dargestellten Anordnung ist wie folgt:

Als Beispiel für das Verlustverhältnis V wird im folgenden auf den im Standard H.323 v4, "Packet-based multimedia communications systems" definierten Parameter "fraction lost" Bezug genommen, welcher sowohl in Empfangs- als auch in Senderichtung zur Verfügung steht. Das Verlustverhältnis V, welches im gegebenen Fall die Werte 0 bis 255 annehmen kann, wird im Multiplizierer M mit dem Faktor 100/255 multipliziert. Daraus resultiert das relative Verlustverhältnis Vrel mit dem Wertebereich von 0 bis 100 Prozent. Als nächster Schritt wird der zeitliche Verlauf dieses relativen Verlustverhältnisses Vrel im Tiefpassfilter TP geglättet, etwa mit folgender Gleichung:

$$Vg[neu]=(1\text{-}a)^* Vg[alt]+a \cdot Vrel \quad \text{wenn gilt} \quad 0 \leq a \leq 1$$

Der Faktor a bestimmt das Ansprechverhalten des Regelalgorithmus, wobei höhere Werte zu schnellerem Ansprechen führen, und wird hier zu 0,3 gewählt. Da diese Gleichung wiederkehrend ausgewertet wird, ist für jeden folgenden Durchlauf Vg[alt] = Vg[neu] zu setzen.

Das geglättete Verlustverhältnis Vg dient in Folge als Eingang für den Diskriminator D, in welchem für die obere Schwelle 3%, für die untere 1% vorgesehen ist. Überschreitet nun das geglättete Verlustverhältnis Vg die obere Schwelle 3%, so wird die Inkrement-Stufe INC angesteuert, welche eine Erhöhung der Rahmen je Paket um 1 auslöst. Wurden bis zum Überschreiten der oberen Schwelle beispielsweise 2 Rahmen pro Paket verpackt, so führt das Ansteuern der Inkrement-Stufe INC zu einer Erhöhung auf 3 Rahmen pro Paket.

Analog dazu wird bei einem Unterschreiten der unteren Schwelle von 1% die Dekrement-Stufe DEC angesteuert, welche den zur Inkrement-Stufe INC umgekehrten Vorgang auslöst, nämlich die Senkung der Rahmen je Paket um 1. Wurden bis zum Unterschreiten der unteren Schwelle beispielsweise ebenfalls 2 Rahmen pro Paket verpackt, so führt das Ansteuern der Dekrement-Stufe DEC zu einer Senkung auf 1 Rahmen pro Paket.

Durch den gezeigten Regelalgorithmus wird einer steigenden Netzbelastung entgegengewirkt und somit erreicht, dass ein kontinuierlicher Datenstrom auch unter widrigen Umständen über ein paketvermittelndes Datennetz gesendet werden kann.

## Patentansprüche

1. Verfahren zur Übermittlung eines Datenstroms mittels Datenpaketen, bei dem der Datenstrom in Rahmen unterteilt wird,
   **dadurch gekennzeichnet,**
   **dass** bei hoher Belastung des Datennetzes, über welches die Datenpakete übermittelt werden, mehr als ein Rahmen in einem Datenpaket übermittelt wird.

2. Verfahren nach Anspruch 1,
   **dadurch gekennzeichnet,**

   - **dass** zur Bestimmung der Netzbelastung das Verlustverhältnis (V), welches dem Quotienten aus nicht rechtzeitig übermittelten Datenpaketen und erwarteten Datenpaketen entspricht, herangezogen wird,
   - **dass** die Anzahl der Rahmen pro Datenpaket erhöht wird, wenn das Verlustverhältnis (V) eine obere Schwelle überschreitet und
   - **dass** die Anzahl der Rahmen pro Datenpaket gesenkt wird, wenn das Verlustverhältnis (V) diese oder eine untere Schwelle unterschreitet.

3. Verfahren nach Anspruch 2, **dadurch gekennzeichnet,**

   - **dass** das Verlustverhältnis (V) in Empfangs- und in Senderichtung bestimmt wird und
   - **dass** der höhere der beiden Werte für die Bestimmung der Anzahl der Rahmen pro Datenpaket herangezogen wird.

4. Verfahren nach einem der Ansprüche 2 bis 3, **dadurch gekennzeichnet, dass** der zeitliche Verlauf des Verlustverhältnisses (V) geglättet wird, insbesondere mit Hilfe eines Tiefpassfilters (TP).

5. Verfahren nach einem der Ansprüche 2 bis 4, **dadurch gekennzeichnet, dass** als obere Schwelle im wesentlichen 3 Prozent und als untere Schwelle im wesentlichen 1 Prozent festgelegt wird.

6. Vorrichtung zur Durchführung aller Schritte eines Verfahrens nach einem der Ansprüche 1 bis 5, **dadurch gekennzeichnet,**

   - **dass** diese Mittel zur Erkennung hoher Belastung eines Datennetzes umfasst und
   - **dass** diese Mittel zum Senden von mehr als einem Rahmen je Datenpaket umfasst.

7. Vorrichtung nach Anspruch 6, **dadurch gekennzeichnet,**

   - **dass** Mittel zur Auswertung des Verlustverhältnisses (V), welches dem Quotienten aus nicht rechtzeitig übermittelten Datenpaketen und erwarteten Datenpaketen entspricht, vorhanden sind,
   - **dass** Mittel vorhanden sind, die Anzahl der Rahmen pro Datenpaket zu erhöhen, sofern das Verlustverhältnis (V) eine obere Schwelle überschreitet und
   - **dass** Mittel vorhanden sind, die Anzahl der Rahmen pro Datenpaket zu senken, sofern das Verlustverhältnis (V) diese oder eine untere Schwelle unterschreitet.

8. Vorrichtung nach Anspruch 7, **dadurch gekennzeichnet,**

   - **dass** Mittel zur Bestimmung des Verlustverhältnisses (V) in Empfangs- und in Senderichtung vorhanden sind und
   - **dass** Mittel vorhanden sind, den höheren der beiden Werte für die Bestimmung der Anzahl der Rahmen pro Datenpaket heranzuziehen.

9. Vorrichtung nach einem der Ansprüche 7 bis 8, **dadurch gekennzeichnet, dass** diese Mittel zur Glättung des zeitlichen Verlaufs des Verlustverhältnisses (V) umfasst, insbesondere ein Tiefpassfilter (TP).

10. Vorrichtung nach einem der Ansprüche 7 bis 9, **da-**

**durch gekennzeichnet, dass** als obere Schwelle im wesentlichen 3 Prozent und als untere Schwelle im wesentlichen 1 Prozent festgelegt ist.

M             TP            D

$$\frac{100}{255}$$

>3%
<1%

INC

DEC

V             Vrel          Vg

Fig. 1

**Europäisches Patentamt**

# EUROPÄISCHER RECHERCHENBERICHT

**Nummer der Anmeldung**

EP 02 01 4315

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int.Cl.7) |
|---|---|---|---|
| X | US 2001/023454 A1 (FITZGERALD CARY W) 20. September 2001 (2001-09-20) * Zusammenfassung * * Absätze [0001]-[0006],[0008],[0019]-[0021],[0030], [0035] * * Abbildungen 1,3,7 * | 1-10 | H04L12/56 |
| | --- | | |
| X | EP 1 178 635 A (CIT ALCATEL) 6. Februar 2002 (2002-02-06) * Zusammenfassung * * Absätze [0001],[0009]-[0015],[0029],[0056],[0058] * | 1,6 | |
| | --- | | |
| A | WITTIG H ET AL: "NETWORK LAYER SCALING: CONGESTION CONTROL IN MULTIMEDIA COMMUNICATION WITH HETEROGENOUS NETWORKS AND RECEIVERS" MULTIMEDIA TRANSPORT AND TELESERVICES. INTERNATIONAL COST 237 WORKSHOPPROCEEDINGS. VIENNA, NOV. 13 - 15, 1994, INTERNATIONAL COST 237 WORKSHOP PROCEEDINGS, BERLIN, SPRINGER, DE, 13. November 1994 (1994-11-13), Seiten 274-293, XP000585306 ISBN: 3-540-58759-4 * Seite 280, Zeile 20 - Seite 280, Zeile 31 * | 1-10 | **RECHERCHIERTE SACHGEBIETE (Int.Cl.7)** H04L |
| | ----- | | |

Der vorliegende Recherchenbericht wurde für alle Patentansprüche erstellt

| Recherchenort | Abschlußdatum der Recherche | Prüfer |
|---|---|---|
| BERLIN | 15. November 2002 | Goller, W |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument

....................................................................
& : Mitglied der gleichen Patentfamilie, übereinstimmendes Dokument

EPO FORM 1503 03.82 (P04C03)

**EP 1 376 947 A1**

## ANHANG ZUM EUROPÄISCHEN RECHERCHENBERICHT
## ÜBER DIE EUROPÄISCHE PATENTANMELDUNG NR.

EP 02 01 4315

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

15-11-2002

| Im Recherchenbericht angeführtes Patentdokument | Datum der Veröffentlichung | Mitglied(er) der Patentfamilie | Datum der Veröffentlichung |
|---|---|---|---|
| US 2001023454 A1 | 20-09-2001 | KEINE | |
| EP 1178635 A | 06-02-2002 | EP 1178635 A1<br>US 2002018443 A1 | 06-02-2002<br>14-02-2002 |

EPO FORM P0461

Für nähere Einzelheiten zu diesem Anhang : siehe Amtsblatt des Europäischen Patentamts, Nr.12/82